(19)

**Europäisches Patentamt**

**European Patent Office**

**Office européen des brevets**

(11) **EP 1 688 402 A1**

(12) **EUROPEAN PATENT APPLICATION**
published in accordance with Art. 158(3) EPC

(43) Date of publication:
**09.08.2006 Bulletin 2006/32**

(51) Int Cl.:
*C04B 38/00* [(2006.01)]    *C04B 35/624* [(2006.01)]

(21) Application number: **04799812.5**

(22) Date of filing: **18.11.2004**

(86) International application number:
**PCT/JP2004/017523**

(87) International publication number:
**WO 2005/051864 (09.06.2005 Gazette 2005/23)**

(84) Designated Contracting States:
**CH DE FR GB LI NL**

(30) Priority: **28.11.2003 JP 2003398869**

(71) Applicants:
• **NGK INSULATORS, LTD.**
  **Nagoya-city, Aichi 467-8530 (JP)**
• **Hirao, Kazuyuki**
  **Soraku-gun,**
  **Kyoto-fu 619-0225 (JP)**
• **Nakanishi, Kazuki**
  **Kyoto-shi,**
  **Kyoto 606-0806 (JP)**

(72) Inventors:
• **HIRAO, Kazuyuki**
  **Kyoto 6190225 (JP)**

• **NAKANISHI, Kazuki**
  **Kyoto-city**
  **Kyoto 6060806 (JP)**
• **FUJITA, Koji**
  **Kyoto 6008106 (JP)**
• **HANZAWA, Shigeru**
  **NGK Insulators, Ltd.**
  **Nagoya-city,**
  **Aichi 4678530 (JP)**
• **SATO, Yousuke**
  **NGK Insulators, Ltd.**
  **Nagoya-city, Aichi 4678530 (JP)**

(74) Representative: **Paget, Hugh Charles Edward et al**
  **Mewburn Ellis LLP**
  **York House**
  **23 Kingsway**
  **London WC2B 6HP (GB)**

(54) **POROUS FORMED ARTICLE, POROUS SINTERED ARTICLE, METHOD FOR PRODUCING THE SAME AND COMPOSITE MEMBER COMPRISING THE SAME**

(57)    The aggregation and phase separation of inorganic particles are performed in a sol containing the inorganic particles and a solvent to produce a porous body having open pores. Preferably, the inorganic particles are particles of one or more inorganic material selected from the group consisting of titania, silica, alumina, zinc oxide and zirconia. Further, the sol may have strong acidity and the pH of the sol is elevated to perform the aggregation and phase separation of the inorganic particles. Alternatively, the sol may have strong basicity and the pH of the sol is lowered to perform the aggregation and phase separation of the inorganic particles. The present invention provides a novel method of producing a porous body and sintered body having co-continuous structure, applicable to a wide variety of inorganic materials.

FIG. 1

**Description**

Technical field of the Invention

The present invention relates to a porous body and porous sintered body having so-called co-continuous structure.

BACKGROUND

It is known that a porous body of, for example, silica can be produced with a high reproducibility by means of so-gel process utilizing phase separation (Japanese patent No. 2123708B, Japanese patent publication No. 3-285833A). According to the process, the uniformity of the shape and size distribution of small pores are excellent. It is further possible to form pores having relatively large pore diameter.

A porous ceramics having such so-called co-continuous structure has been recently attracting attention. The reason is that it has been expected as a medium for separating liquid or gas, carrier for a catalyst, an optical device, or a carrier for a biocatalyst such as an enzyme or a microorganism. It has been demanded that such porous ceramics is composed of a material other than silica. For example, titania has functions of an optical catalyst, optical properties and a sensor for oxygen gas. If a porous sintered body having co-continuous structure made of titania would be provided, it is considered that such sintered body can be applied in various fields to contribute to the improvement of the industry. It is, of course, also expected the same kinds of possibilities for the sintered body composed of metals and various kinds of ceramics other than titania.

For example, it has been attracting attention to a technique of generating and controlling the localized state of light. A photonic crystal and random medium has been studied for this. The concept of so-called Anderson localization of electrons due to the interference effect is present in amorphous wherein atoms are randomly arranged. Since such interference effect has a common property in all kinds of waves, the concept of localization of electrons can be applied to the localization of photons in a system of a dielectric material. That is, when light is irradiated into a medium where the dielectric constant is randomly changed in a space scale comparable with the wavelength of the light, the localization of light occurs due to interference of multiple light scattering.

It is necessary to use a medium strongly scattering light for realizing the localized state of light. For this, it is required to use the medium having a refractive index with a large difference from that of the background and to accurately control the structure in a range of the wavelength of light. It is considered a porous body having co-continuous structure (porous body having through holes continuous with each other) utilizing titania having a high refractive index (anatase; n=2.52, rutile; n=2.71).

DISCLOSURE OF THE INVENTION

However, titanium alkoxide, aluminum alkoxide, zinc alkoxide , zirconium alkoxide and the like have very high reactivity, so that the polymerization reaction is difficult to control.

An object of the present invention is to provide a novel method, applicable to a wide variety of inorganic materials, of producing a porous body and sintered body having co-continuous structure.

The present invention provides a method of producing a porous body comprising open pores, by performing the aggregation and phase separation of inorganic particles in a sol comprising the inorganic particles and a solvent.

The present invention further provides a porous body obtained by the method.

The present invention further provides a method of producing a porous sintered body, the method comprising the steps of:

obtaining a porous body comprising open pores by performing the aggregation and phase separation of inorganic particles in a sol comprising the inorganic particles and a solvent; and
sintering the porous body.

The present invention further provides a porous sintered body obtained by the method.

According to the present invention, a porous body and sintered body can be successfully produced for the first time by preparing a sol comprising inorganic particles and a solvent and performing the aggregation and phase separation of the inorganic particles in the sol.

This method is epoch-making in that a porous body having co-continuous structure can be produced using inorganic material such as titanium alkoxide which is not subject to polymerization reaction as the starting material, even when it is difficult to control the reactivity of an organic compound as the starting material. The method is thus applicable to a a wide variety of inorganic materials.

The process of the present invention will be described further.

According to the present invention, sol of inorganic particles is utilized as the starting material.

The co-continuous structure is obtained when domain formation due the phase separation and sol-gel transition occur simultaneously. Contrary to this, in the case that the sol gel transition takes place earlier than the phase separation, sol of uniform composition is obtained. Further, if phase separation would take place earlier than sol gel transition, macroscopic two phase separation would take place. According to the present invention, the progress of the sol gel transition and phase separation is controlled to generate a transitional network structure (co-continuous structure) occurring between the uniform gel generation and the macroscopic two-phase separation. Such co-continuous structure can be fixed as it is to successfully obtain a porous body.

Further, the present invention provides a porous body comprising one or more inorganic material selected from the group consisting of titania, silica, alumina, zinc oxide and zirconia, said porous body comprising pores having a diameter of 0.1 $\mu$m or more, wherein 50 percent or more of the whole of said pores are distributed in a range of $\pm 20$ percent with respect to the central micro pore size.

BRIEF DESCRIPTION OF THE DRAWINGS

Fig. 1 is a photograph of a porous body according to experiment number 1-1, taken by a scanning electron microscope.

Fig. 2 is a photograph of a porous body of experiment number 1-2, taken by a scanning electron microscope.

Fig. 3 shows the results of measurement of pore size distribution by method of mercury penetration, where the horizontal axis indicates the pore size and the vertical axis indicates accumulated pore volume.

Fig. 4 shows the results of measurement of pore size distribution by method of mercury penetration, where the horizontal axis indicates the pore size and the vertical axis indicates accumulated pore volume.

Fig. 5 is a photograph of a sample (shaped body) according to experiment number 2-4, taken by a scanning electron microscope.

Fig. 6 is a photograph of a sample (shaped body) according to experiment number 2-1, taken by a scanning electron microscope.

Fig. 7 is a photograph of a sample (shaped body) according to experiment number 2-2, taken by a scanning electron microscope.

Fig. 8 is a photograph of a sample (shaped body) according to experiment number 2-3, taken by a scanning electron microscope.

Fig. 9 is a photograph of a sintered body obtained by subjecting the shaped body of experiment number 1-1 to heat treatment, taken by a scanning electron microscope.

Fig. 10 is a photograph of a sintered body obtained by subjecting the shaped body of experiment number 1-2 to heat treatment, taken by a scanning electron microscope.

Fig. 11 shows the results of measurement of powder X-ray diffraction analysis of titania sol.

Fig. 12 shows the results of powder X-ray diffraction measurement of a sample after the heat treatment.

Fig. 13 is a graph showing the results of back scattering measurement of s sintered body of experiment number 1-1.

Fig. 14 is a graph showing the results of back scattering measurement of a sintered body of experiment number 1-2.

Fig. 15 (a) is a cross sectional view showing a composite material 1A having a tube-shaped or ring-shaped holding member 1A and a porous body or sintered body 3A generated therein.

Fig. 15 (b) is a cross sectional view showing a composite material 1B having two plate-shaped holding member 1B and a porous body or sintered body 3B generated therebetween.

Fig. 15 (c) is a cross sectional view showing a composite material 1C having a honeycomb shaped holding member 1C and a porous body or sintered body 3C generated therein.

Fig. 16 shows a titania porous body remaining in pores on the inner wall face of the honeycomb structure.

Fig. 17 shows a photograph of a titania porous body formed in pores of the honeycomb structure, taken by a scanning electron microscope.

BEST MODES FOR CARRYING OUT THE INVENTION

Preferred embodiments will be further described below.

The kind and material of inorganic particles are not particularly limited, and metal oxides and metals are particularly preferred. The metal oxide includes silica, titania, zirconia, alumina and zinc oxide. Two or more kinds of metal oxides may be used at the same time. Further, the metal includes gold, silver and the like.

According to a preferred embodiment, the acidity of sol is made strong and the pH of the sol is elevated to perform the aggregation of the inorganic particles and phase separation. Alternatively, the basicity of the sol is made strong initially and the pH of the sol is decreased to perform the aggregation of inorganic particles and phase separation. The sol of the inorganic particles is made acidic or basic so as to increase electrostatic repulsion between the inorganic particles, so that the inorganic particles can be uniformly dispersed. It is thus possible to obtain a porous body having more uniform pore size distribution.

In the case that pH is elevated, the pH of the sol may preferably be 2 or lower and more preferably be 1 or lower. Further, an acid may preferably be added to the sol for lowering the pH of the sol. The acid may preferably be a mineral (0.001 N or higher) acid such as hydrochloric acid, nitric acid or the like, or an organic acid (of 0.01 N or higher) such as formic acid, acetic acid or the like. In the case of lowering the pH, the initial pH of the sol may preferably be 12 or higher and more preferably be 13 or higher.

According a preferred embodiment, the pH of the acidic sol is elevated to reduce the electrostatic repulsion of the inorganic particles and to aggregate the inorganic particles by means of Van Der Waals Force until network is generated. Sol can be obtained having continuous through poresby utilizing colloid particles having substantially comparable size as the secondary polymer which can be obtained from an alkoxide.

The method of elevating the pH of the sol or decreasing the pH of the sol is not particularly limited, and an alkaline substance or an acidic substance may be added to the sol from the outside. It is, however, preferred that a compound capable of releasing an alkaline substance over time may be contained in the sol. It is thus possible to carry out the formation of the network uniformly and to obtain a porous body having uniform structure. Such compound includes the followings.

Formamide, an organic amide such formamide, N-methyl formamide, N,N-dimethyl formamide, acetamide, N-methyl acetamide, N,N-dimethyl acetamide etc., or urotropin may be used.

The content of addition of the compound releasing the alkaline substance over time described above may preferably be 10 weight parts or more, with respect to 100 weight parts of the inorganic particles. If the content is too low, although macroscopic phase separation to two phases can be caused, the resulting gel tends to be loosely aggregated. That is, the concentration of the electrolyte is decreased, the thickness of the electric double layer is made larger and the energy barrier for the aggregation is made higher. Many particles thus cannot aggregate over the energy barrier and tends to be positioned at the secondary minimum in energy free curve. It is thus considered that the particles tend to form loose aggregates.

Further, according to a preferred embodiment, the sol contains a water soluble polymer or surfactant. The water soluble polymer or surfactant prevents the association of the inorganic particles and a solvent and to perform the phase separation of the aggregated particles and the solvent in the process of the aggregation of the inorganic particles. The water soluble polymer or surfactant may be those capable of producing solution having an appropriate concentration and soluble uniformly into the sol reaction system. Specifically, the sodium salt or potassium salt of polystyrene sulfonic acid belonging to a metal salt polymer; polyacrylic acid belonging to a polymer acid and capable of dissolving to produce polyanions, polyacrylic amine and poly ethylene imine belonging to a polymer base and capable of generating polycations in aqueous solution, polyethylene oxide belonging to a neutral polymer and having ether bond in the main chain, polyvinyl pyrrolidone and the like are preferred. Further, formamide, polyalcohol or a surfactant may be used instead of the organic polymer. In this case, glycerin is most preferred as the polyalcohol and polyoxyethylene alkyl ether is most preferred as the surfactant.

The content of addition of the water soluble polymer or surfactant may preferably be 3 weight parts or higher with respect to 100 weight parts of the inorganic particles.

The aggregation of the inorganic particles in the sol provides the network. The resultant network tends to have a relatively low bonding strength so that the pores tend to disappear due to the transfer of substance during the removal of the solvent. Therefore, on the viewpoint of maintaining the shape of the pores, the solvent may be replaced with a substitute solvent having a surface tension lower than that of the original solvent in the pores after the phase separation. The substitute solvent may be removed by drying. Further, on the similar viewpoint, the sol solvent or substitute solvent may be removed by freeze drying.

The porous body according to the present invention may be used after the drying. Alternatively, the porous body may be sintered to produce a sintered body. Conditions for the sintering such as sintering temperature, time, pressure and the like are not particularly limited, and appropriately selected depending on the kind of the material used. For example, in the case of sintering a shaped body comprising a ceramics such as titania, silica, alumina, zinc oxide, zirconia and the like, the sintering temperature may be made 300 to 2000 °C. However, if the sintering temperature is too high, porous structure would not be left, and if the sintering temperature is too low, the structure would not be fixed. It is necessary to select an optimum temperature depending on the kind of the inorganic particles used. Further, the sintering may be carried out under ambient pressure, or may be pressurized sintering process such as HIP, HP and the like.

According to a preferred embodiment, the porous body or porous sintered body according to the present invention is formed in a predetermined space of a holding member. It is thus possible to provide a composite body having the supporting body and the porous body or porous sintered body held therein.

The width or length of the space is not particularly limited. According to the present invention, it is possible to form and fill good porous body and porous sintered body in the space, even when the width (gap) of the space is, for example, 1 mm or smaller.

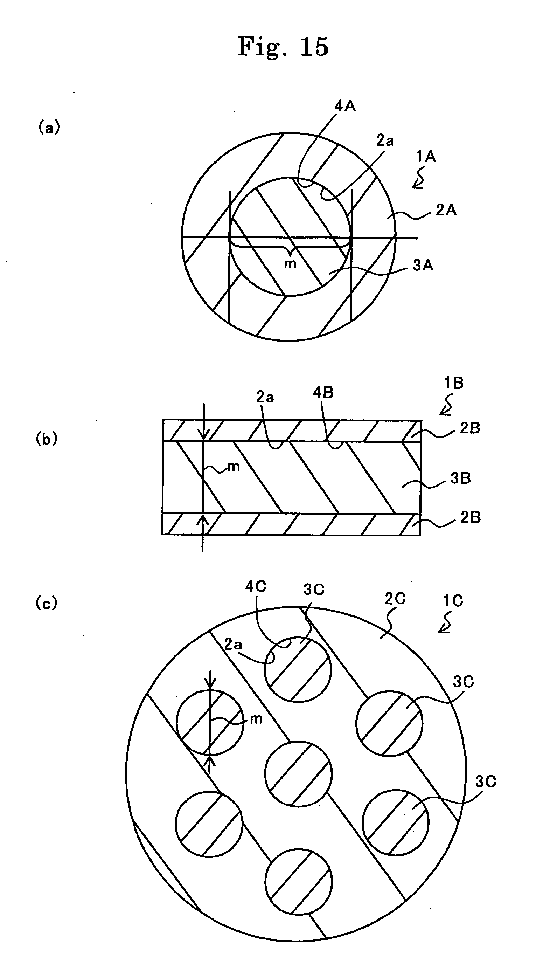

Further, the shape and dimension of the holding member and the shape of the space are not particularly limited. The holding member may be, for example, tube-shaped or ring-shaped. In this case, for example as shown in Fig. 15 (a), a composite material 1A has a tube-shaped or ring —shaped holding member 2A and a porous body or sintered body 3A filled in a circular space 4A of the holding member 2A. The width of the space 4A corresponds to the diameter "m". The tube-shaped body 2A may be so-called capillary. Further, the tube shaped body 2A may be obtained by binding a plurality of capillaries.

Further, the holding member may be composed of, for example, a plurality of plates such as flat plates. In this case, for example as shown in Fig. 15 (b), a pair of flat plates 2B constitute the holding members. The porous body or sintered body of the present invention is generated in a space 4B between two flat plates 2A to provide a composite material 1B. The width of the space 4B corresponds with the distance of the flat plates 2B.

Further, the holding member may be composed of a honeycomb structure. In this case, for example as shown in Fig. 15 (c), a plurality of spaces 4C are formed in a honeycomb structure 2C, and the porous body or sintered body according to the present invention is generated in each space 4C to provide a composite material 1C. The width of each space 4C corresponds to the diameter of each space.

According to the present embodiment, the material of the holding member is not particularly limited, and may be a ceramic, polymer, metal, glass, or ceramic-metal composite material. For example, inorganic oxides such as silicon oxide, aluminum oxide, titanium, oxide, zirconium oxide and cordierite, and a ceramic such as silicon carbide and silicon nitride are preferred.

Further, the holding member may be made of a material whose surface has been subjected to surface treatment, for adjusting the adhesion to the porous body or sintered body generated in the space. Such method of the surface treatment includes various methods such as sol-gel process, chemical vapor deposition, physical vapor deposition, sputtering, plating and the like.

According to the present embodiment, preferably, the center line average surface roughness Ra of the inner wall surface 2a facing each space of the supporting bodies 2A, 2B or 2C may preferably be 0.05 micrometer or larger. It is found that the peeling of the porous body or sintered body 4A, 4B or 4C from the inner wall surface and the falling from the space can be thereby reduced.

Since it is difficult to increase the Ra value particularly when the distance "m" is 1 mm or smaller, Ra may normally be 20 $\mu$m or lower and more preferably be 10 $\mu$m or lower.

The Ra value of the inner wall surface facing the space of the holding member is measured by cutting the holding member to expose the inner wall surface facing the space. The Ra value of the inner wall surface is then measured by means of a surface roughness tester.

The method of increasing the Ra value of the inner wall surface facing the space of the holding member is not particularly limited. For example, the porosity of the material constituting the holding member may be made larger to increase the Ra value of the inner wall surface. Further, slurry containing ceramic particles may be flown into the space of the holding member and then heat treated for the curing, so that the Ra value of the inner wall surface facing the space can be increased. Further, in the case of ceramic, the holding member may be produced of a material having a large particle diameter to increase the Ra value of the inner wall surface.

EXAMPLES

(Experiment A)

(production of samples)

Samples according to examples shown in tables 2 to 4 were produced using titania powder shown in table 1 as the starting material.

Specifically, polyethylene oxide having a molecular weight of 100,000 (supplied by Aldrich Co.), 60 percent conc. Nitric acid (Hayashi Pure chemicals co. Ltd., premium grade), titania sol (ISHIHARA SANGYO Co.,Ltd., STS-010) and formamide were used as the reagents. Polyethylene oxide was dissolved into nitric acid solution and cooled with ice, to which the titania sol and formamide were added and agitated to obtain homogeneous sol. The sol was contained in a container, which was sealed and held at 40 °C in a temperature bath to perform the gelling. The gel was subjected to aging for 24 hours. Thereafter, 2-methyl-2-propanol was used to replace the solvent and subjected to freeze drying. The thus obtained shaped body was heat treated at 1200 °C for 1 hour to obtain a sintered body.

Table 1

|  | Analytic value |
| --- | --- |
| Specific gravity | 1.313 |
| $TiO_2$ (wt%) | 30.1 |
| $SO_4$ (wt%) | 0.19 |
| Fe (wt%) | 0.0026 |
| $HNO_3$ (wt%) | 1.54 |
| PH | 1.7 |
| Particle size (nm) | 7 |

(Measurement of structure at micrometer region)

The morphology of the samples before and after the heat treatment was observed by means of a scanning electron microscope (SEM; Hitachi Ltd.) S- 510 type). The morphology was categorized as follows. "Co-continuous structure" is considered to be present when the sample has continuous titania bone structure and through pores continuously formed at micrometer level. "Macropores are not present", when pores are not observed at micrometer level.
Further, mercury porosimeter (PORESIZER 9320: Micromeritics Co. Ltd.) was used to measure the pore size distributionat micrometer level.

(Measurement of crystallinity)

The crystallinity of the samples before and after the heat treatment were identified by X-ray diffraction analysis (CuK $\alpha$ ray) using "RAD-C system" supplied by Rigaku Corporation. The sample was ground in an agate mortar to produce fine powder. The size of crystallite was calculated according to the formula of Scherrer

$$L = \frac{0.9\lambda}{B\cos\theta}$$

using the thus obtained integrated value of the corresponding peak. $\lambda$ represents the wavelength of X-ray, $B(2\theta)$ represents the width of diffraction ray, $\theta$ represents the diffraction angle, and K represents a constant. K equals 0.9 when the half value width is used as $B(2\theta)$.

(Backscattering measurement)

Backscattering measurement was performed as an evaluation of optical properties of as a random medium. When parallel rays are incident, such incident ray interferes with light propagating in the just opposite direction at the highest probability, so that the strength of scattering becomes larger than that obtained by another ray. When a medium capable of strongly scattering light is used, the localization of light would take place to obtain a large scattering strength even when light is incident at a crossing angle.
When the mean free path of light "I", which represents a distance light proceeds per one scattering, is around the wavelength of the light, the light can be most localized.
The strength of scattering in the backscattering is calculated theoretically according to the formula (1).

$$\alpha(\theta) = \frac{3a}{8\pi}\left[1 + \frac{2z_0}{l} + \frac{1}{(1 + q_\perp l)^2}\left\{1 + \frac{1 - \exp(-2q_\perp z_0)}{q_\perp l}\right\}\right] + b$$

As a result, when the mean free path of light was near the wavelength of the light, the width of the peak was widened. It was thus considered that the light was strongly localized. Rhodamine pigment laser (I=488 nm) was irradiated to measure the scattering strength. Ar+ laser of CW was used to excite the pigment laser. The mean free path of light was calculated using the results of measurements according to the formula 1.

Table 2

| Experiment No. | Titania Sol (ml) | Formamide (ml) | water (ml) | 1M Nitric acid (ml) | PEO (100000) (g) | TMOS (ml) | Gelation Temperature (°C) | Replacement With Solvent | Freeze Drying | Morphology |
|---|---|---|---|---|---|---|---|---|---|---|
| 1-1 | 5 | 1 | 0.2 | 1.3 | 0.1002 | 0 | 40 | Present | Present | Co-continuous Structure |
| 1-2 | 5 | 1 | 0.1 | 1.4 | 0.1000 | 0 | 40 | Present | Present | Co-continuous Structure |
| 1-3 | 5 | 1 | 0.3 | 1.2 | 0.0999 | 0 | 40 | Present | Present | Co-continuous Structure |
| 1-4 | 5 | 1 | 0.5 | 1 | 0.0998 | 0 | 40 | Present | Present | Co-continuous Structure |
| 1-5 | 5 | 1 | 0.9 | 0.6 | 0.0998 | 0 | 40 | Present | Present | Co-continuous Structure |
| 1-6 | 5 | 1 | 0.3 | 1.2 | 0.0999 | 0 | 40 | Present | Present | Co-continuous Structure |
| *TMOS: tetramethoxy silane | | | | | | | | | | |

Table 3

| ExperiMent No. | Titainia Sol (ml) | Form Amide (ml) | Water (ml) | 1M Nitric Acid (ml) | PEO (100000)(g) | TMOS (ml) | Gelation Tempeature (°C) | Replacement With Solvent | Freeze Drying | Morphology |
|---|---|---|---|---|---|---|---|---|---|---|
| 2-1 | 5 | 1 | 0 | 1 | 0.7980 | 0 | 40 | Present | Present | Co-continuous Structure |
| 2-2 | 5 | 1 | 0 | 1 | 0.8970 | 0 | 40 | Present | Present | Co-continuous Structure |
| 2-3 | 5 | 1 | 0 | 1 | 0.1201 | 0 | 40 | Present | Present | Co-continuous Structure |
| 2-4 | 5 | 1 | 0 | 1 | 0.0503 | 0 | 40 | Present | Present | No macropores |
| 2-5 | 5 | 1 | 0 | 1 | 0.1002 | 0.11 | 40 | Present | Present | Co-continuous Structure |
| 2-6 | 5 | 1 | 0 | 1 | 0.0900 | 0.11 | 40 | Present | Present | Co-continuous Structure |
| 2-7 | 5 | 1 | 0 | 1 | 0.0802 | 0.11 | 40 | Present | Present | Co-continuous Structure |
| 2-8 | 5 | 1 | 0 | 1 | 0.1098 | 0.11 | 40 | Present | Present | Co-continuous Structure |
| 2-9 | 5 | 1 | 0 | 1 | 0.1200 | 0.11 | 40 | Present | Present | Co-continuous Structure |
| 2-10 | 5 | 1 | 0 | 1 | 0.0999 | 0.11 | 40 | Present | Present | Co-continuous Structure |

(continued)

| ExperiMent No. | Titainia Sol (ml) | Form Amide (ml) | Water (ml) | 1M Nitric Acid (ml) | PEO (100000)(g) | TMOS (ml) | Gelation Tempeature (°C) | Replacement With Solvent | Freeze Drying | Morphology |
|---|---|---|---|---|---|---|---|---|---|---|
| 2-11 | 5 | 1 | 0 | 1 | 0.1101 | 0 | 40 | Present | Present | Co-cohtinuous Structure |

EP 1 688 402 A1

Table 4

| Experiment No. | Titania Sol (ml) | Form Amide (ml) | Water (ml) | 1M Nitric Acid (ml) | PEO (100000) (g) | TMOS (ml) | Gelation Temperature (°C) | Replacement With solvent | Freeze Drying | Morphology |
|---|---|---|---|---|---|---|---|---|---|---|
| 2-12 | 5 | 1 | 0 | 0.8 | 0.0999 | 0 | 40 | Yes | Present | Co-continuous Structure |
| 2-13 | 5 | 1 | 0 | 0.9 | 0.1000 | 0 | 40 | Yes | Present | Co-continuous Structure |
| 2-14 | 5 | 1 | 0 | 1.1 | 0.1003 | 0 | 40 | Yes | Present | Co-continuous Structure |
| 2-15 | 5 | 1 | 0 | 1.2 | 0.1000 | 0 | 40 | Yes | Present | Co-continuous Structure |
| 2-16 | 5 | 1 | 0 | 1 | 0.1503 | 0 | 40 | Yes | Present | Co-continuous Structure |
| 2-17 | 5 | 1 | 0 | 0.5 | 0.0999 | 0 | 40 | Yes | Present | Co-continuous Structure |
| 2-18 | 5 | 1 | 0 | 1.5 | 0.1001 | 0 | 40 | Yes | Present | Co-continuous Structure |

According to experiment numbers 1-1 to 1-6 shown in table 2, it was obtained morphology of co-continuous structure. Further, according to experiment numbers 2-1 to 2-3 and 2-5 to 2-18, it was similarly obtained morphology of co-continuous structure.

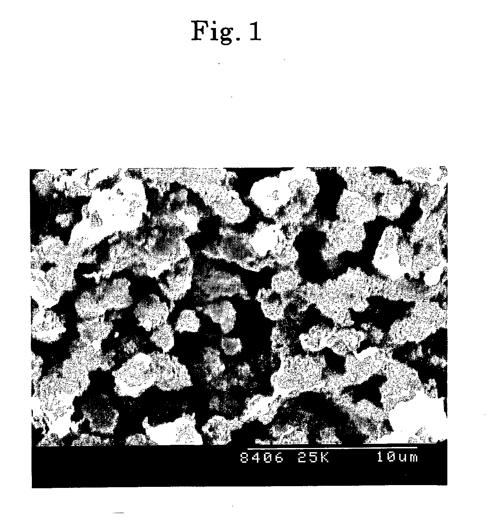

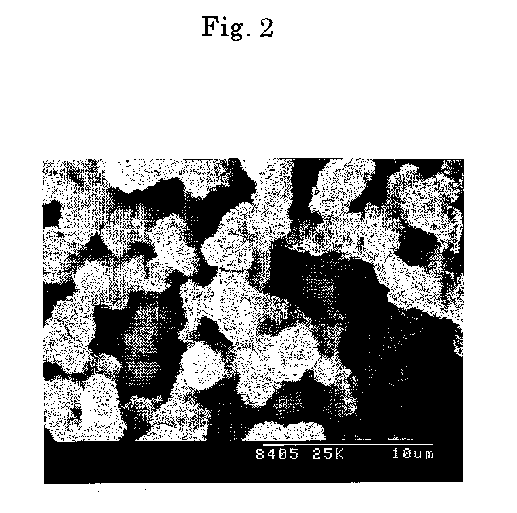

Fig. 1 shows a photograph of a porous body of experiment number 1-1, taken by a scanning electron microscope. Fig. 2 shows a photograph of a porous body of experiment number 1-2, taken by a scanning electron microscope. According to the photographs, the skelton and pores are entangled each other and together form three dimensional network to provide the co-continuous structure.

The pH at the initiation stage of reaction mixture is lowered and the electrostatic repulsion is made larger, by adding an acid such as nitric acid as a solvent. The pH at the initiation stage of reaction is thus lowered so that more time is needed until the initiation of the gelation. It is considered that the gelation and phase separation tend to progress simultaneously.

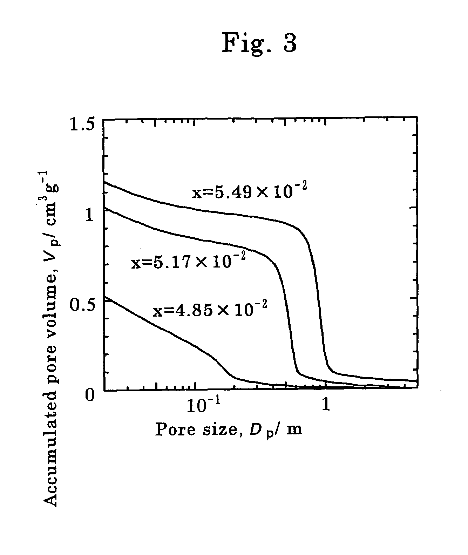

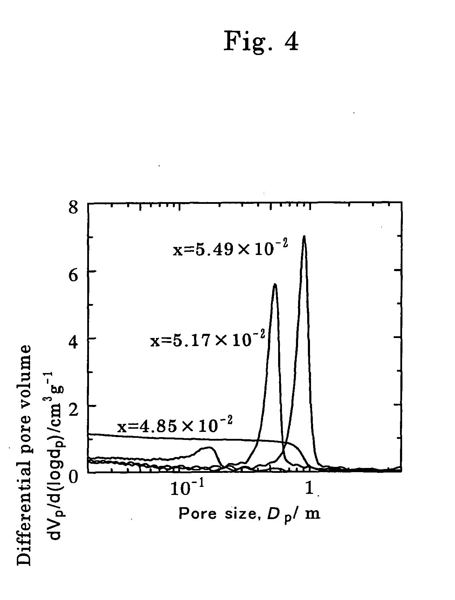

Fig. 3 shows the results of measurement of pore size distribution by method of mercury penetration. The horizontal axis indicates the pore size and the vertical axis indicates accumulated pore volume. Fig. 4 shows the results of measurement of pore size distribution by method of mercury penetration. The horizontal axis indicates the pore size and the vertical axis indicates accumulated pore volume. Further, "x" value was changed as shown in Figs. 3 and 4, provided that the molar ratio of TiO2: polyethylene oxide: nitric acid is 1: $5.06 \times 10^{-2}$ : x.

As can be seen from the results, as the ratio "x" of nitric acid is elevated, the domain size becomes larger. As the amount of nitric acid is increased, the pH at the initiation stage of reaction is lowered. It is thus considered that the gelationwould take place later with respect to occurrence of the phase separation. At a composition containing a small amount of nitric acid, the gelling would take place at early stage of the phase separation. It is thus considered that an interface of a titania-rich region and solvent phase would not be clear enough so as to provide a thickskelton. It is further considered that the peptization would contribute due to a lower pH and the increase of the electrostatic repulsion. Colloid particles can have a pH much different from the isoelectric point of titania, so that colloid particles do not aggregate and highly dispersed to provide uniform colloid particles having uniform particle size. Uniform gel network formation and phase separation can be realized to obtain a porous body having a uniform pore size by using such sol. As shown in Figs. 3 and 4, the effects are considerable in the composition containing a larger amount of nitric acid. It is thus considered that gel having more uniform pore size can be obtained.

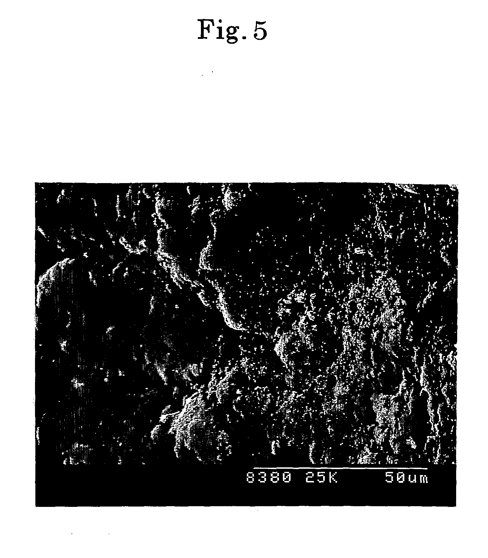

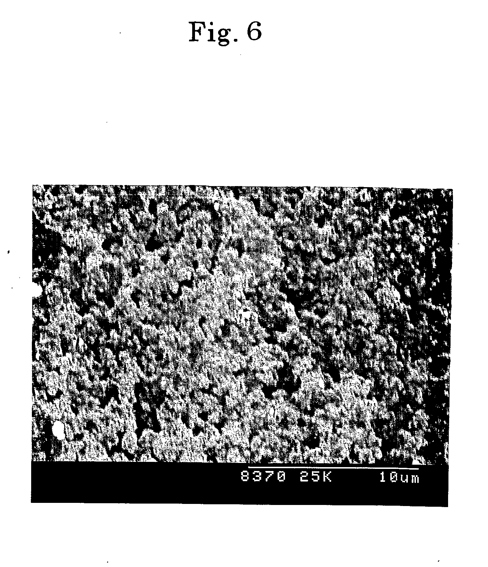

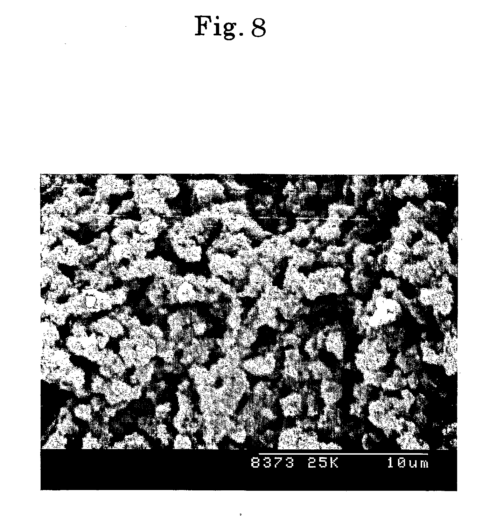

Further, Fig. 5 shows a photograph showing a sample (porous body) of experiment number 2-4 shown in table 3, taken by a scanning electron microscope. Further, Figs. 6, 7 and 8 show photographs of samples of experiment numbers 2-1, 2-2 and 2-3, respectively, shown in table 3, taken by a scanning electron microscope.

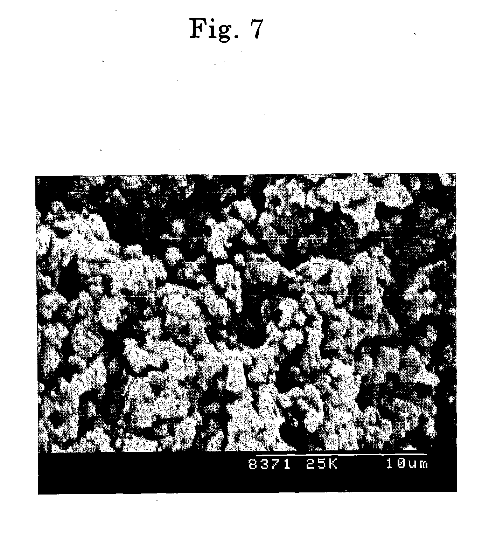

According to experiment numbers 2-1 to 2-4, the morphology change was shown, provided that the amounts of nitric acid and water were made constant and the amount of polyoxyethylene oxide with respect to that of titania was changed. The molar ratio of $TiO_2$: polyethylene oxide: nitric acid was made 1: x: $4.21 \times 10^{-2}$, where x was $2.53 \times 10^{-2}$ in Fig. 5 (number 2-4), x was $4.05 \times 10^{-2}$ in Fig. 6 (number 2-1), x was $4.55 \times 10^{-2}$ in Fig. 7 (number 2-2), and x was $6.07 \times 10^{-2}$ in Fig. 6 (number 2-3).

The polyethylene oxide chain is absorbed onto the surface of colloid particles so that the interface with solvent is unstabilized to encouragethe phase separation through enthalpy mechanism. According to the experiment of Fig. 5 (number 2-4), the phase separation is deferred with respect to the gelation to obtain a structure withoutmacropores. Co-continuous structure was obtained in the experiments of Figs. 6 to 8 (numbers 2-1, 2-2 and 2-3). Among these, as the amount of polyethylene oxide with respect to that of titania is increased, the phase separation takes place earlier with respect to the gelation so that the domain size is elevated. It is thus considered that the tendency of phase separation can be changed by controlling the amount of polyoxyethylene oxide to control the pore size.

Further, the solvent contains, for example, water having a large surface tension. Further, although polycondensation reaction takes place in a part of colloid particles, the polycondensation requires the point contact of the spherical particles so that the number of the particles participating in the polycondensation is small. The particles are thus aggregated by means of Fan Del Waals force. The bonding is thus relatively weak and the shrinkage after drying is large so that it is made difficult to maintain the gel bone structure. Contrary to this, the solvent of the gel is replaced with 2-methyl-2-propanol so that the shrinkage after the drying can be reduced and the morphology can be considerably maintained compared with the case that freeze drying is performed.

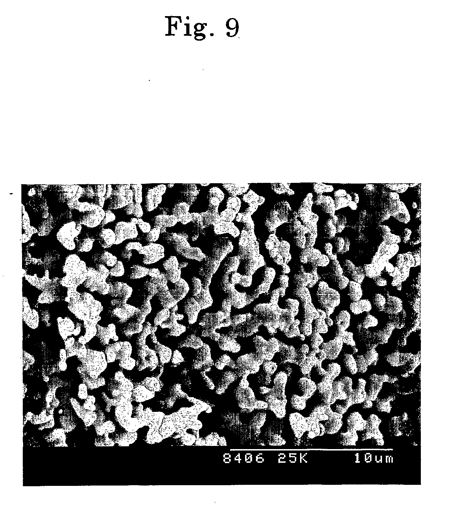

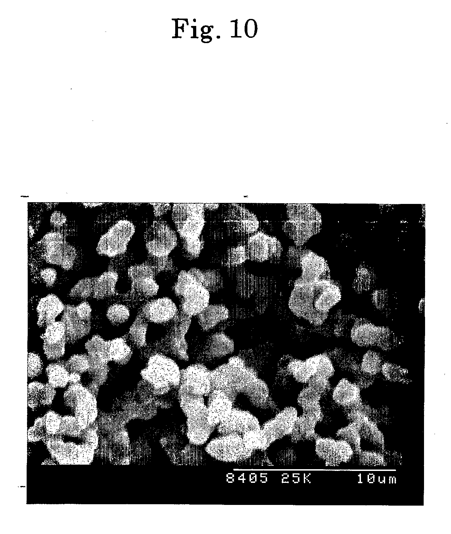

Each shaped body of each example shown in tables 2 to 4 was then heat treated and sintered. Fig. 9 is a photograph of a sintered body obtained by subjecting the shaped body of experiment number 1-1 to heat treatment, taken by a scanning electron microscope. Fig. 10 is a photograph of a sintered body obtained by subjecting the shaped body of experiment number 1-2 to heat treatment, taken by a scanning electron microscope. Before the heat treatment, the surface of the skeltonwas rough and proved to be aggregated body of fine particles. After the heat treatment, however, the skeltonwas made thinner and the surface becomes smoother while co-continuous structure can be maintained. Further, according to the measurement of poresize distribution by method of mercury penetration, the pore size was slightly reduced and the cumulative pore volume was considerably reduced after the heat treatment. Although the shaped body is shrunk isotropically after the heat treatment, it is considered that diffusion would take place to fill the space between fine particles of the titania skelton and to densify the skelton so that the pore size can be substantially maintained.

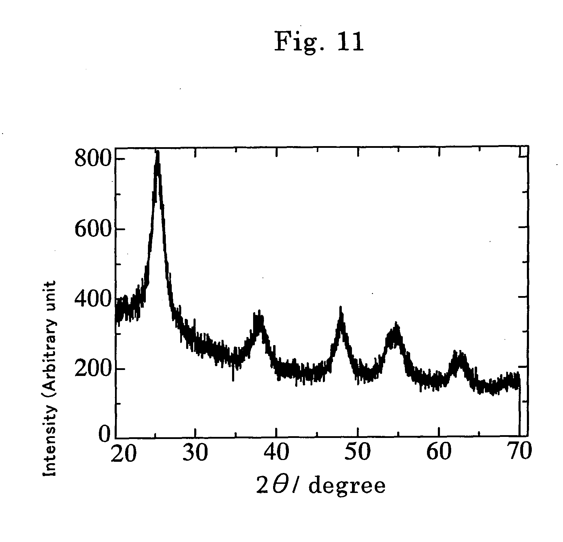

Further, Fig. 11 shows the results of measurement of powder X-ray diffraction of titania sol powder before the heat treatment. It is provided that the titania particles before the heat treatment are composed of anatase-type crystal. The shaped body is composed of aggregated body of fine particles, and the particle size of the fine particles is very small so that the volume percentage of amorphous region on the surface is relatively large. It is considered that the effects of the amorphous region become considerable to lower the peak strength. Further, the crystallite was small and the peak width was thus widened, so that the crystallite size calculated according to the formula of Scherrer was proved to be 10 nm.

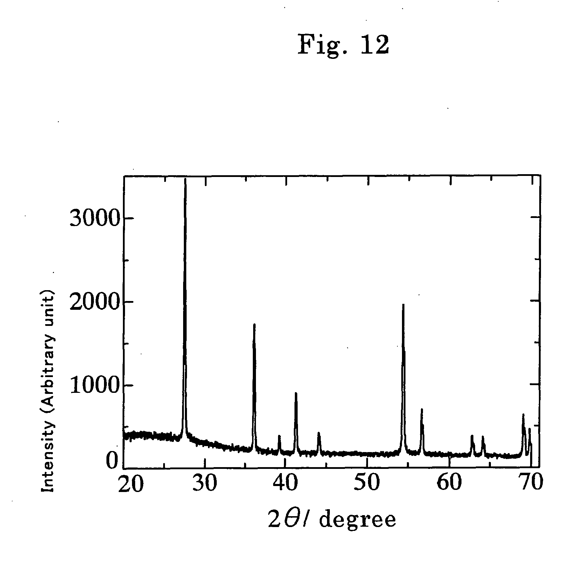

Fig. 12 shows the results of measurement of powder X-ray diffraction analysis of the heat treated sample. After the heat treatment, the crystalline phase was transferred from anatase-type (n=2.52) to rutile-type (n=2.71) to prove that the refractive index can be increased. Further, the sintering process resulted in a sharper peak.

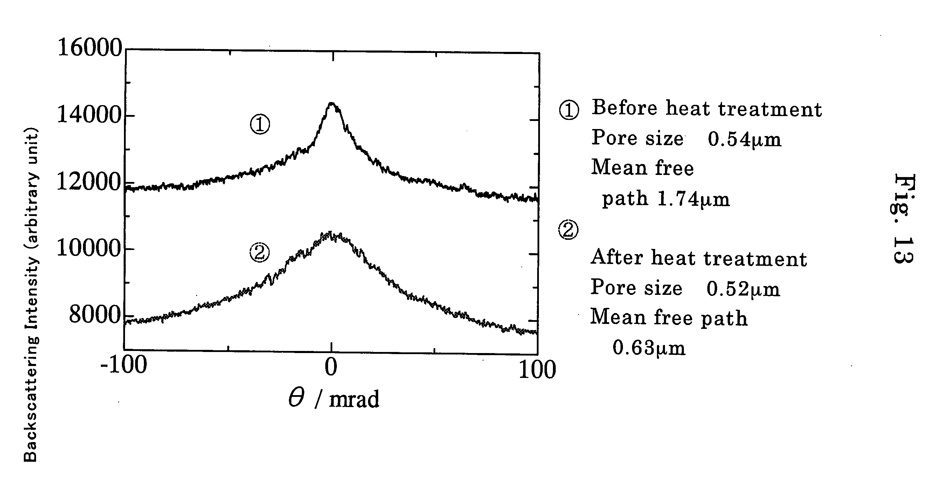

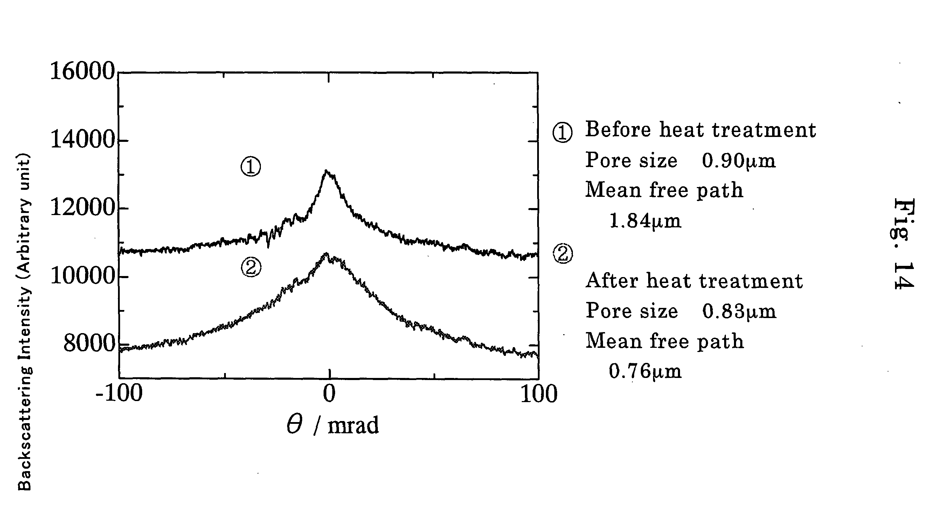

Fig. 13 is a graph showing the results of back scattering measurement of the sintered body of experiment number 1-1. Fig. 14 is a graph showing the results of back scattering measurement of the sintered body of experiment number 1-2. The formula 1 was used for the fitting to calculate the mean free path, which was written in the graph. According to either of the samples, although the pore size is not substantially changed after the heat treatment, the mean free path can be considerably reduced by the heat treatment. Before the heat treatment, although the shaped body has co-continuous structure having macro pores viewed macroscopically, the shaped body senses light as an aggregated body of fine particles. The results were proved to be similar to those obtained by the measurement of fine particles of several nm. After the heat treatment, the interface of the fine particles disappeared and only macro pores can be sensed, and the mean free path "I" of light was lowered and becomes close to the wavelength. It is thus proved that the considerable localization of light have taken place.

Further, the mean free path was proved to be changed depending on the pore size. The mean free path "I" was the smallest in the sample (Fig. 13) having a pore size of 0.52 $\mu$m after the sintering. It strongly suggests the localization of light takes place.

(Experiment B)

A porous body 3C was generated in a space 4C of a honeycomb structure 2C as schematically shown in Fig. 15 (c). Specifically, the honeycomb structure 2C had a cell pitch of 1.05 mm, a wall thickness of 0.1 mm, a spacing (width of space) m of 0.95 mm, and a porosity of wall face of about 30 percent.

The honeycomb structure 2C was cut and the Ra value of the inner wall surface 2a was measured using a surface roughness tester and proved to be 1.7 $\mu$ m. The honeycomb structure was observed by means of an electron microscope to confirm that pores of several micrometers as well as fine irregularity on the inner wall surface 2a.

Each sample according to each example of tables 2 to 4 was produced and supported in the space 4C of the honeycomb structure 2C.

Specifically, 1 M nitric acid solution, polyethylene oxide, and optionally water, formamide and titania sol were prepared. First, 1 M nitric acid aqueous solution and water were mixed, polyethylene oxide and titania sol were added and stirred for 10 minutes. Formamide was then further added and stirred for 10 minutes. After the stirring, a honeycomb structure prepared in advance was dipped into the reaction solution and ultra sonic wave was irradiated to the honeycomb structure for removing air. The honeycomb structure was contained in a sealed container and maintained in a temperature bath at 40 °C until the reaction solution was solidified. The solid was then aged for 24 hours, subjected to solvent replacement with 2- methyl-2-propanol several times and then freeze dried to provide a composite material1C composed of a honeycomb structure 2C supporting a titania porous body 3C.

The titania porous body 3C formed in the cell 4C of the thus obtained honeycomb structure 2C was mandatorily extruded and peeled, and the honeycomb structure 2C was then cut, so that the inner surface of the honeycomb structure supporting the titania porous body 3C was observed by an scanning electron microscope.

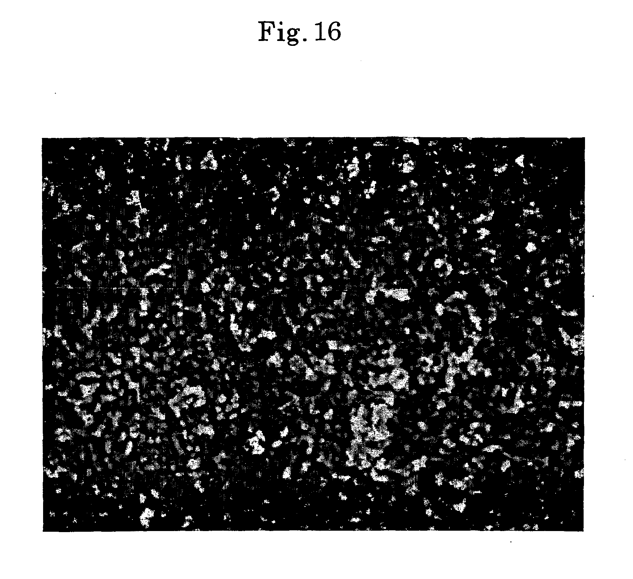

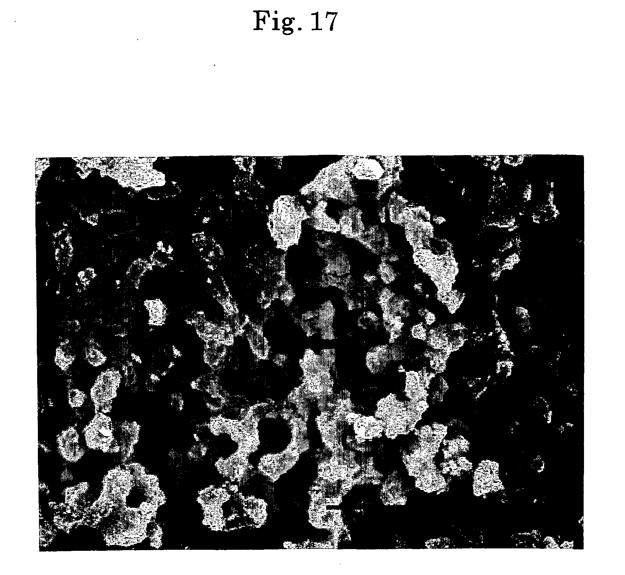

As a result, in each example, it was confirmed that the titania porous body remained mainly in the pores of the inner wall surface 2a of the honeycomb structure, for example as shown in Fig. 16. Fig. 17 shows a photograph of a titania porous body formed in pores of the honeycomb structure, taken by an scanning electron microscope. Figs. 16 and 17 show the results of the example 1-1 shown in table 2. For example, as shown in Fig. 17, the titania porous body was proved to be formed in the pores in each example. This strongly suggest that the titania porous body was engaged to the inner wall surface of the cell of the honeycomb structure and thus strongly supported by the honeycomb structure.

**Claims**

1. A method of producing a porous body comprising open pores; said method comprising the step of:

performing aggregation and phase separation of inorganic particles in a sol comprising said inorganic particles and a solvent.

2. The method of claim 1, wherein said inorganic particles comprises one or more inorganic material selected from the group consisting of titania, silica, alumina, zinc oxide and zirconia.

3. The method of claim 1 or 2, wherein said sol has a strong acidity and wherein the pH of said sol is elevated to perform said aggregation and phase separation.

4. The method of claim 1 or 2, wherein said sol has a strong basicity and wherein the pH of said sol is lowered to perform said aggregation and phase separation.

5. The method of claim 3 or 4, wherein said sol comprises a compound capable of releasing a substance changing the pH of said sol over time.

6. The method of any one of claims 1 to 5, wherein said sol comprises a water soluble polymer or a surfactant.

7. The method of any one of claims 1 to 6, wherein said solvent is removed by drying after said phase separation.

8. A porous body obtained by the method of any one of claims 1 to 7.

9. A composite material comprising a holding member comprising a space formed therein and a porous body generated in said space, wherein said holding member comprises an inner wall surface facing said space, wherein said inner wall surface has a central average surface roughness Ra of 0.05 $\mu$m or more, and wherein said porous body comprises the porous body of claim 8.

10. The composite material of claim 9, wherein said space has a width of 1 mm or smaller.

11. A composite material of claim 9 or 10, wherein said holding member comprises a honeycomb structure.

12. A method of producing a porous sintered body comprising open pores; said method comprising the steps of:

performing aggregation and phase separation of inorganic particles in a sol comprising said inorganic particles and a solvent to obtain a porous body, and
subjecting said porous body to a heat treatment.

13. The method of claim 12, wherein said inorganic particles comprises one or more inorganic material selected from the group consisting of titania, silica, alumina, zinc oxide and zirconia.

14. The method of claim 12 or 13, wherein said sol has a strong acidity and wherein the pH of said sol is elevated to perform said aggregation and phase separation.

15. The method of claim 12 or 13, wherein said sol has a strong basicity and wherein the pH of said sol is lowered to perform said aggregation and phase separation.

16. The method of claim 14 or 15, wherein said sol comprises a compound capable of releasing a substance changing the pH of said sol over time.

17. The method of any one of claims 12 to 16, wherein said sol comprises a water soluble polymer or a surfactant.

18. The method of any one of claims 12 to 17, wherein said solvent is removed by drying after said phase separation.

19. A porous body obtained by the method of any one of claims 12 to 18.

20. A composite material comprising a holding member comprising a space formed therein and a porous sintered body generated in said space, wherein said holding member comprises an inner wall surface facing said space, wherein said inner wall surface has a central average surface roughness Ra of 0.05 $\mu$m or more, and wherein said porous sintered body comprises the porous sintered body of claim 19.

**21.** The composite material of claim 20, wherein said space has a width of 1 mm or smaller.

**22.** The composite material of claim 20 or 21, wherein said holding member comprises a honeycomb structure.

**23.** A porous body comprising one or more inorganic material selected from the group consisting of titania, silica, alumina, zinc oxide and zirconia, said porous body comprising macro pores having a pore size of 0.1 $\mu$m or more, wherein 50 percent or more of said macro pores having a pore size of 0.1 $\mu$m are distributed in a range of $\pm20$ percent with respect to the central pore size of said porous body.

Fig. 1

Fig. 2

Fig. 3

# Fig. 4

Fig. 5

Fig. 6

Fig. 7

Fig. 8

8373 25K    10um

Fig. 9

8406 25K 10um

Fig. 10

Fig. 11

# Fig. 12

EP 1 688 402 A1

# Fig. 13

① Before heat treatment
Pore size 0.54μm
Mean free
path 1.74μm

② After heat treatment
Pore size 0.52μm
Mean free path
0.63μm

28

# Fig. 14

# Fig. 15

(a)

(b)

(c)

Fig. 16

Fig. 17

## INTERNATIONAL SEARCH REPORT

| International application No. |
| --- |
| PCT/JP2004/017523 |

**A. CLASSIFICATION OF SUBJECT MATTER**
Int.Cl⁷ C04B38/00, 35/624

According to International Patent Classification (IPC) or to both national classification and IPC

**B. FIELDS SEARCHED**

Minimum documentation searched (classification system followed by classification symbols)
Int.Cl⁷ C04B38/00, 35/624, 41/85, B22F9/16-9/30, G01N30/48

Documentation searched other than minimum documentation to the extent that such documents are included in the fields searched

| | | | |
| --- | --- | --- | --- |
| Jitsuyo Shinan Koho | 1922-1996 | Toroku Jitsuyo Shinan Koho | 1994-2005 |
| Kokai Jitsuyo Shinan Koho | 1971-2005 | Jitsuyo Shinan Toroku Koho | 1996-2005 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2002-293657 A (Naohiro SOGA), | 1,2,6-8,12, |
| | 09 October, 2002 (09.10.02), | 13,17-19,23 |
| Y | Full text; all drawings | 9-11,20-22 |
| A | (Family: none) | 3-5,14-16 |
| X | JP 11-292528 A (Naohiro SOGA), 26 October, 1999 (26.10.99), Full text; all drawings. & US 6562744 B1 & WO 1999/038006 A1 | 8-11,19-23 |
| X | JP 11-61209 A (Kyoto Daiichi Kagaku Co., Ltd.), 05 March, 1999 (05.03.99), Abstract; Par. Nos. [0035], [0054] to [0065] (Family: none) | 1,7,8 |

☐ Further documents are listed in the continuation of Box C.  ☐ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 21 February, 2005 (21.02.05) | 08 March, 2005 (08.03.05) |

| Name and mailing address of the ISA/ | Authorized officer |
| --- | --- |
| Japanese Patent Office | |
| Facsimile No. | Telephone No. |

Form PCT/ISA/210 (second sheet) (January 2004)

33